# EUROPÄISCHE PATENTSCHRIFT

(11) **EP 0 778 801 B1**
(45) Veröffentlichungstag und Bekanntmachung des Hinweises auf die Patenterteilung: **28.10.1998**
(21) Anmeldenummer: 95929732.6
(22) Anmeldetag: 30.08.1995
(51) Int. Cl.: B44C 1/17, B44F 1/08, B44F 1/10, B41M 3/14, B42D 15/10

(54) **RASTERBILD UND THERMOTRANSFERFOLIE ZU DESSEN HERSTELLUNG**
DOT-MATRIX IMAGE AND THERMAL TRANSFER FILM FOR PRODUCING THE SAME
IMAGE CONSTITUEE D'UNE MATRICE DE POINTS ET FILM DE TRANSFERT THERMIQUE UTILE POUR PRODUIRE UNE TELLE IMAGE

(30) Priorität: 03.09.1994 DE 4431531
(43) Veröffentlichungstag der Anmeldung: 18.06.1997
(73) Patentinhaber: LEONHARD KURZ GMBH & CO., 90763 Fürth (DE)
(72) Erfinder: SÜSS, Joachim, D-90768 Fürth (DE); BREHM, Ludwig, D-91325 Adelsdorf (DE)
(74) Vertreter: LOUIS, PÖHLAU, LOHRENTZ & SEGETH
(86) Internationale Anmeldenummer: DE9501178
(87) Internationale Veröffentlichungsnummer: WO9607552

(56) Entgegenhaltungen:
- EP-A- 0 439 092
- DE-C- 4 313 521
- GB-A- 2 220 386

## Beschreibung

Die Erfindung betrifft ein Rasterbild, welches aus wenigstens zwei Arten von unterschiedliche Eigenschaften aufweisenden Rasterpunkten besteht und in einem Thermotransferverfahren erzeugt ist. Weiterhin befaßt sie sich mit einer Thermotransferfolie zur Herstellung eines derartigen Rasterbildes, deren von einem Trägerfilm auf das Substrat übertragbare Transferschicht zur Erzeugung der unterschiedlichen Rasterpunkte eine der Zahl der unterschiedlichen Rasterpunkte entsprechende Anzahl jeweils einer Rasterpunkt-Art zugeordneter, entsprechend verschieden ausgebildeter Bereiche aufweist.

Die bekannten Thermotransfer-Druckverfahren arbeiten zur Erzeugung von Halbtonbildern üblicherweise mit einer Rasterung, wobei von der Thermotransferfolie Rasterpunkte von normalerweise gleicher Größe in entsprechend der gewünschten Helligkeit des Rasterbildes unterschiedlicher Punktdichte auf das Substrat übertragen werden. Sofern mehrfarbige Rasterbilder erzeugt werden sollen, verwendet man in diesem Zusammenhang Thermotransferfolien, deren Transferschicht jeweils in mehrere Bereiche unterteilt ist, wobei jeder Farbe ein eigener Bereich der Transferschicht zugeordnet ist. Beim Drucken wird dann die Thermotransferfolie entsprechend der gewünschten Farbe über das Substrat bewegt und farbige Rasterpunkte mittels des Druckwerkzeugs erzeugt, wobei im allgemeinen die unterschiedlich farbigen Bereiche der Transferschicht der Thermotransferfolie in ihren Abmessungen dem zu bedruckenden Substrat entsprechen.

Auf diese Art und Weise ist es möglich, bei Verwendungen eines entsprechend engen Rasters und kleiner Rasterpunkte Rasterbilder guter Qualität zu erzeugen. Trotzdem sind bei der bekannten Vorgehensweise entweder die Gestaltungsmöglichkeiten beschränkt oder es muß mit sehr kleinen Punkten und sehr kleinem punktabstand gearbeitet werden, wodurch der apparative Aufwand sehr hoch wird. Die Erzeugung von teilweise matten, teilweise glänzenden bzw. reflektierend ausgebildeten Rasterbildern ist bisher nicht in Betracht gezogen worden.

Der Erfindung liegt daher die Aufgabe zugrunde, weitere Gestaltungsmöglichkeiten für Rasterbilder zu erschließen, ohne daß ein besonders großer apparativer Aufwand getrieben werden müßte.

Zur Lösung dieser Aufgabe wird nach der Erfindung vorgeschlagen, ein Rasterbild der eingangs erwähnten Art derart auszubilden, daß wenigstens zwei Arten von Rasterpunkten jeweils eine unterschiedliche, durch Beugung, Interferenz oder Reflexion des Lichtes wirksame Struktur aufweisen. Beispielsweise kann ein erfindungsgemäßes Rasterbild aus Punkten mit einer matten Oberfläche und Punkten mit einer glänzenden Oberfläche zusammengesetzt sein, wodurch nicht nur die übliche Halbton- bzw. Farbauflösung eines Rasterbildes möglich ist, sondern außerdem die Möglichkeit geschaffen wird, das Rasterbild durch unterschiedliche Glanzeffekte etc. zu gestalten. Man erhält auf diese Art und Weise ganz spezielle, sich von den bisher bekannten Rasterbildern unterscheidende Rasterbilder, die besonders schwer nachzuahmen und z.B. mittels eines Farbkopierers nicht reproduzierbar sind, was bedeutet, daß die erfindungsgemäßen Rasterbilder bspw. als Sicherheitselemente für Wertdokumente, wie z.B. Banknoten, Kreditkarten, Ausweise oder dergleichen, die ja immer wieder, vor allem mit Hilfe der modernen Farbkopierer, zu fälschen versucht werden, besonders geeignet sind.

Besonders vorteilhaft ist es, wenn die optisch wirksame Struktur zumindest einer Art von Rasterpunkten eine eine Beugung oder Interferenz erzeugende Diffraktionsstruktur, vorzugsweise eine Gitterstruktur ist. Mittels derartiger Beugungs- oder Interferenzstrukturen lassen sich die unterschiedlichsten optischen Effekte erzeugen, wobei die jeweils zu verwendende Struktur davon abhängt, ob das Rasterbild in reflektierendem Licht oder in Durchlicht beobachtet wird.

Mittels unterschiedlicher Strukturen ist es, was an sich bekannt ist, bspw. auch möglich, ein Rasterbild als optisch veränderliches Bild auszubilden, und zwar derart, daß sich das Rasterbild abhängig von Beleuchtungs- oder Betrachtungswinkel bzw. der Wellenlänge des zur Beleuchtung verwendeten Lichtes ändert, wobei in der einfachsten Form lediglich die Farbstellung variiert. Durch Verwendung zweier Arten von Rasterpunkten unterschiedlicher Diffraktionsstruktur, mittels derer z.B. alphanumerische Zeichen erzeugt sind, kann in einem derartigen Fall erreicht werden, daß die Farbe der Zeichen einerseits und des Hintergrunds andererseits abhängig vom Betrachtungswinkel bzw. dem zur Beleuchtung verwendeten Licht sich verändert.

Um derartige Beugungs- oder Interferenzeffekte zu verstärken, ist es zweckmäßig, zumindest eine Art von Rasterpunkten mit einer reflektierenden Schicht auszubilden, wodurch diese Punkte eine entsprechende Helligkeit erhalten. Durch Verwendung einer reflektierenden Schicht bei nur einer Art von Rasterpunkten kann weiterhin erreicht werden, daß diese Rasterpunkte gegenüber den übrigen, das Rasterbild bildenden Rasterpunkten wesentlich heller erscheinen, wodurch sich bisher bei Rasterbildern unbekannte grafische Effekte erreichen lassen. Selbstverständlich ist es aber auch möglich, sämtliche das Rasterbild bildende Rasterpunkte reflektierend auszubilden, jedoch jeweils mit einer unterschiedlichen Struktur zu versehen, bspw. bestimmte Arten der Rasterpunkte mit einer Gitterstruktur auszubilden, während andere Rasterpunkte eine ebene reflektierende Schicht aufweisen.

Weitere Gestaltungsmöglichkeiten für das Rasterbild ergeben sich dann, wenn wenigstens zwei Arten von Rasterpunkten jeweils unterschiedliche Abmessungen aufweisen. Bei einer derartigen Ausbildung des Rasterbildes ist es zur Erzeugung von Halbtönen nicht mehr erforderlich, daß der Abstand der Rasterpunkte bzw. deren Dichte verändert wird. Wenn die Möglichkeit besteht, Rasterpunkte unterschiedlicher Abmessungen vorzusehen, eine Möglichkeit, von der bisher noch niemals Gebrauch gemacht wurde, können Bereiche des Rasterbildes mit geringerer Farbdichte dadurch erzeugt werden, daß Rasterpunkte kleineren Durchmessers eingesetzt werden, während dann, wenn eine satte Farbe bzw. gute Deckung erzielt werden sollen, Rasterpunkte größeren Durchmessers vorgesehen sind. Diese Variation der Rasterpunkt-Größe ist vor allem dann günstig, wenn die Rasterpunkte eine spezielle Sruktur aufweisen und z.B. reflektierend sind, da in einem derartigen Fall durch die Variation der Rasterpunkt-Größe ein besonders gleichmäßiger Effekt bzgl. der jeweiligen Struktur erreicht wird.

Schließlich ist es selbstverständlich auch möglich, daß wenigstens zwei Arten von Rasterpunkten jeweils unterschiedliche Farbe aufweisen, wodurch die Gestaltungsmöglichkeiten zusätzlich erweitert werden.

Eine Thermotransferfolie der eingangs erwähnten Art zur Herstellung eines erfindungsgemäßen Rasterbildes zeichnet sich dadurch aus, daß die unterschiedlichen Bereiche der Transferschicht jeweils eine optisch durch Beugung, Interferenz oder Reflexion des Lichtes unterschiedlich wirksame Struktur aufweisen. Zur Erzeugung des Rasterbildes werden dann aus den unterschiedlichen Bereichen der Transferschicht mit der optisch unterschiedlich wirksamen Struktur jeweils die Rasterpunkte auf das Substrat übertragen, wobei zu diesem Zweck die Thermotransferfolie in der an sich von Thermo-Farbdruckern her bekannnten Art und Weise gegenüber dem Substrat bewegt werden muß, um jeweils den Bereich der Transferschicht, der die gewünschte Oberflächen-Struktur aufweist, über die entsprechende Stelle des Substrates zu bringen.

Eine Thermotransferfolie kann weiterhin zweckmäßig so ausgebildet sein, daß die Transferschicht in den unterschiedlichen Bereichen Rasterpunkte unterschiedlicher Abmessungen aufweist, um bspw. stets mit gleicher Punktdichte arbeiten zu können, trotzdem jedoch die Möglichkeit zu haben, dichter bzw. weniger dicht bedruckte Stellen des Rasterbildes auf dem Substrat zu erzeugen.

Besondere Effekte lassen sich erzielen, wenn die Transferschicht wenigstens in einem Bereich eine reflektierende Schicht aufweist, wobei die reflektierende Schicht zweckmäßig von einer Metallisierung gebildet ist, weil dann das Rasterbild aus reflektierenden und nichtreflektierenden Bereichen zusammengesetzt werden kann oder, sofern sämtliche Bereiche der Transferschicht reflektierend ausgebildet sind, sich Bilder besonderer Helligkeit erzielen lassen.

Dies ist vor allem dann von Bedeutung, wenn die optisch wirkende Struktur der Transferschicht eine eine Beugung oder Interferenz erzeugende Diffraktionsstruktur, insbesondere Gitterstruktur ist.

Um Rasterbilder entsprechender Haltbarkeit zu erzeugen, kann es günstig sein, wenn die Transferschicht in wenigstens einem Bereich anschließend an den Trägerfilm eine transparente Schutzlackschicht aufweist, weil dann die Abriebfestigkeit des auf dem Substrat erzeugten Rasterbildes vergrößert werden kann.

Bei Vorhandensein einer transparenten Schutzlackschicht kann diese vorteilhafterweise in wenigstens zwei Bereichen der Transferschicht unterschiedliche Farbe aufweisen, wodurch die Möglichkeit eröffnet wird, mehrfarbige Rasterbilder herzustellen.

Die optisch wirksame Struktur der Transferschicht wird vorteilhafterweise dadurch erzeugt, daß sie in eine Lackschicht der Transferschicht eingeprägt ist. Entsprechende Prägeverfahren sind von der Herstellung von Heißprägefolien mit Diffraktionsstrukturen etc. bekannt. Dabei werden mittels einer Matrize die Strukturen in einen thermoplastischen oder nicht vollständig ausgehärteten Lack eingeprägt. Diese Verfahren können grundsätzlich in gleicher Weise auf Thermotransferfolien bzw. deren Transferschichten übertragen werden, wobei es höchstens erforderlich werden kann, die Strukturtiefe an das Anwendungsgebiet anzupassen, weil die Dicke der Transferschicht von Thermotransferfolien beschränkt ist, um eine einwandfreie Übertragung der Transferschicht auf das Substrat mit den bekannten Vorrichtungen zu gewährleisten.

Schließlich kann es vorteilhaft sein, wenn die Schutzlackschicht die optische wirksame Struktur bei auf ein Substrat aufgebrachter Transferschicht abdeckt, weil dann eine Abformung und damit eine Fälschung erschwert, wenn nicht sogar unmöglich gemacht wird. Gleichzeitig wird hierdurch die Dauerhaftigkeit des Rasterbildes vergrößert, weil die Oberflächen-Struktur gegen direkte mechanische Angriffe geschützt ist.

Hinsichtlich des grundsätzlichen Aufbaus der Transferschicht der Thermotransferfolie kann auf an sich bekannte Folien sowie Heißprägefolien verwiesen werden, wobei als einziger Unterschied der erfindungsgemäßen Thermotransferfolie gegenüber bekannten Thermotransferfolien hervorzuheben ist, daß bei der Thermotransferfolie gemäß der Erfindung zumindest in einem Bereich eine Strukturierung der Oberfläche der auf das Substrat zu übertragende Transferschicht erfolgen muß, weshalb eine entsprechend verformbare Schicht vorgesehen sein muß. Nähere Einzelheiten über die Zusammensetzung der Schichten und deren Dicke werden nachstehend erläutert.

Weitere Merkmale, Einzelheiten und Vorteile der Erfindung ergeben sich aus der folgenden Beschreibung eines Ausführungsbeispiels eines Rasterbildes sowie einer zur Erzeugung dieses Rasterbildes geeigneten Thermotransferfolie anhand der Zeichnung. Dabei zeigen:
- Fig. 1: ein schematisches Beispiel eines Rasterbildes, das aus vier verschiedenen Typen von Rasterpunkten zusammengesetzt ist;
- Fig. 2: eine schematische Ansicht eines Abschnittes einer Thermotransferfolie zur Erzeugung des Rasterbildes der Fig. 1 mit vier verschiedenen Bereichen und
- Fig. 3: schematisch einen Längsschnitt durch die Folie der Fig. 2, wobei allerdings jeweils nur kurze Stücke der einzelnen Bereiche gezeigt sind.

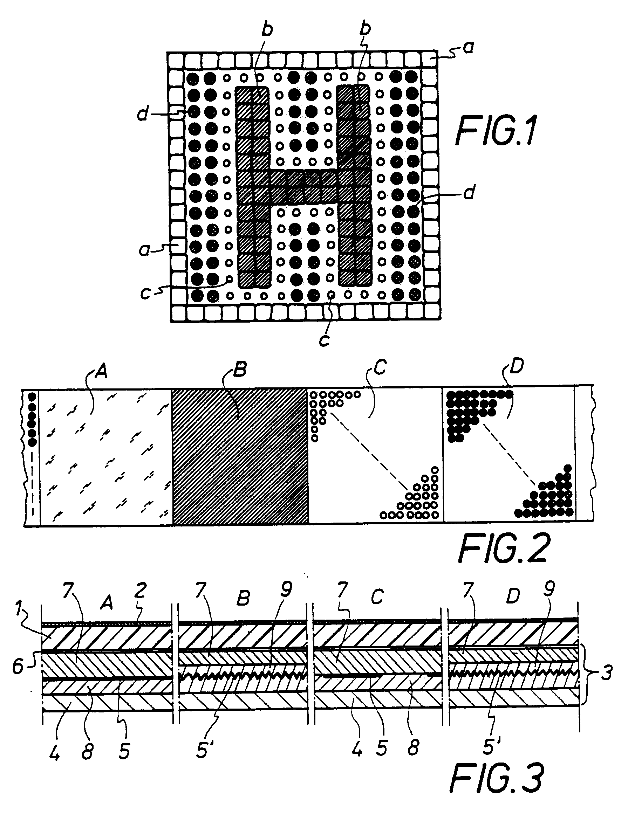

Das in Fig. 1 dargestellte Rasterbild besteht aus vier unterschiedlichen Typen von Rasterpunkten. Dementsprechend weist die in Fig. 2 und 3 gezeigte Thermotransferfolie jeweils aufeinanderfolgend vier unterschiedliche Bereiche A, B, C und D auf, mittels derer die Rasterpunkte der Typen a, b, c und d erzeugt sind.

Die Rasterpunkte des Typs a sind verhältnismäßig große, entsprechend den Abmessungen des für den Transfervorgang verwendeten Werkzeugs eng aneinander anschließende Rasterpunkte mit einer im vorliegenden Beispiel glatten, durch metallische Beschichtung reflektierend ausgebildeten Oberfläche.

Die Rasterpunkte des Typs b sind ebenfalls verhältnismäßig großflächig und weisen eine insgesamt mit einer reflektierenden Schicht versehene Oberfläche auf. Die Rasterpunkte des Typs b sind jedoch, wie dies in Fig. 3, Abschnitt B angedeutet ist, deutlich strukturiert, wobei die Rasterpunkte des Typs b vorzugsweise mit einer Gitterstruktur bzw. generell mit einer eine Beugung oder Interferenz erzeugenden Diffraktionsstruktur versehen ist.

Während die Abmessungen der Rasterpunkte des Typs a und b nur von den Abmessungen des zur entsprechenden Übertragung der Transferschicht auf ein Substrat verwendeten Werkzeugs, z.B. Dots, abhängen (beim dargestellten Ausführungsbeispiel wird ein Dot verwendet, der so groß ist, daß durch dichte Aneinanderreihung von Rasterpunkten des Typs a und b eine vollflächige Bedeckung des Substrats möglich ist), sind die Rasterpunkte des Typs c und d unabhängig vom Durchmesser des zur Übertragung der Transferschicht dienenden Werkzeuges.

Die Rasterpunkte des Typs c und d unterscheiden sich zum einen hinsichtlich ihres Durchmessers. Die Rasterpunkte des Typs d haben einen wesentlich größeren Durchmesser als die Rasterpunkte des Typs c. Außerdem besteht ein Unterschied zwischen den Rasterpunkten des Typs c und d darin, daß die Rasterpunkte des Typs c eine glatte, metallisierte Oberfläche aufweisen, während die Rasterpunkte des Typs d ein beispielsweise entsprechend den Rasterpunkten des Typs b strukturierte Oberfläche besitzen.

Bei den gezeigten Ausführungsbeispielen sind sämtliche Rasterpunkte-Typen a, b, c und d jeweils mit einer reflektierenden Schicht versehen, so daß das Rasterbild gemäß Fig. 1 insgesamt metallisch reflektierend erscheint, so daß es besonders zweckmäßig als Sicherheitselement für ein Wertdokument o. dgl. eingesetzt werden kann.

Weitere Details der Rasterpunkte der Typen a, b, c und d werden anhand der näheren Erläuterung der Thermotransferfolie in Verbindung mit den Fig. 2 und 3 ersichtlich.

Wie vor allem Fig. 3 erkennen läßt, umfaßt eine Thermotransferfolie zur Herstellung eines Rasterbildes gemäß der Erfindung üblicherweise einen Trägerfilm 1, der auf seiner bei Benutzung der Thermoleiste zugekehrten, in Fig. 3 oberen Seite eine an sich bekannte Gleitschicht 2 trägt. Auf der der Gleitschicht 2 gegenüberliegenden Seite des Trägerfilms 1 ist eine aus mehreren Lagen bestehende, insgesamt mit 3 bezeichnete Transferschicht vorgesehen, die im Thermotransferverfahren von dem Trägerfilm 1 abgelöst und auf dem Substrat, welches in der Zeichnung nicht dargestellt ist, bspw. einem Papierblatt o. dgl., festgelegt wird.

Die Transferschicht 3 umfaßt, ausgehend von dem Trägerfilm 1, auf jeden Fall eine Lackschicht sowie eine zur Festlegung der Lackschicht auf dem Substrat dienende, üblicherweise heißsiegelfähige Klebeschicht 4.

Beim gezeigten Ausführungsbeispiel ist der Aufbau der Transferschicht 3 etwas komplizierter. Dabei wird davon ausgegangen, daß die Rasterpunkte jeweils eine reflektierende, von einer Metallisierung gebildete Schicht 5 bzw. 5' umfassen.

Um eine leichte Ablösung der Transferschicht 3 von dem Trägerfilm 1 zu gewährleisten, wird der Trägerfilm 1 vor der Aufbringung der restlichen Lagen der Transferschicht 3 mit einer Ablöseschicht 6, üblicherweise einer Wachsschicht versehen. An die Wachsschicht 6 schließt dann im allgemeinen eine Schicht 7 eines transparenten Schutzlacks an. Außerdem ist normalerweise zwischen der Klebeschicht 4 und der Metallisierung 5 bzw. 5' eine Haftvermittlerschicht 8 vorgesehen.

Die Transferschicht 3 der Thermotransferfolie gemäß Fig. 2 und 3 stimmt in den verschiedenen Bereichen A, B, C und D insofern überein, als stets eine Ablöseschicht 6, eine transparente Schutzlackschicht 7, eine Metallisierung 5 bzw. 5', die Haftvermittlerschicht 8 und die Klebeschicht 4 vorgesehen sind.

Zur Ausbildung der unterschiedlichen Rasterpunkt-Typen a, b, c und d sind jedoch gewisse Modifikationen erforderlich.

In dem Bereich A, der zur Ausbildung der glatten, großflächigen Rasterpunkte a dient, ist eine ganzflächige, glatte Metallisierung 5 direkt auf der Schutzlackschicht 7 vorgesehen. Zur Erzeugung der Rasterpunkte des Typs a werden entsprechende Bereiche aus der Transferschicht 3 (gemäß der Größe des zum Übertragen verwendeten Dots) abgetrennt und von dem Trägerfilm 1 auf das Substrat übertragen.

Die Bereiche B der Thermotransferfolie, die zur Erzeugung der Rasterpunkte des Typs b dienen, sind ebenfalls ganzflächig mit einer Metallisierung 5' versehen. Der Unterschied zu den Bereichen A besteht jedoch darin, daß die Metallisierung 5' nicht glatt sondern als Gitterstruktur oder sonstige Diffraktionsstruktur ausgebildet ist (sh. Fig. 3). Um dies zu ermöglichen, weist die Transferschicht 3 in den Bereichen B zwischen der transparenten Schutzlackschicht 7 und der Metallisierung 5 eine weitere Lackschicht 9 auf, die entsprechend strukturierbar ist. Zu diesem Zweck kann die Lackschicht 9 bspw. von einem thermoplastischen Lack gebildet sein oder auch von einem Lack, der in einer gewissen Zeit noch verformbar ist, so daß in einem Replizierverfahren die entsprechende Struktur für die Metallisierung 5' in die Lackschicht 9 eingeprägt werden kann. Auch die Rasterpunkte des Typs b werden entsprechend den Punkten des Typs a dadurch erzeugt, daß ein der Größe des Dots entsprechender Teil aus der Transferschicht 3 herausgetrennt und mittels des Dots auf das Substrat übertragen wird.

Die Größe der erzeugten Rasterpunkte hängt somit bei den Rasterpunkten der Type a und b lediglich von der Auflösung des zur Erzeugung der Rasterpunkte dienenden Thermodruckers bzw. sonstigen Werkzeugs ab.

Demgegenüber ist die Ausbildung der Bereiche C und D der Thermotransferfolie derart, daß die Größe der entstehenden Rasterpunkte der Type c und d von der Größe des entsprechenden Übertragungswerkzeugs unabhängig ist. In den Bereichen C und D ist nämlich die in Erscheinung tretende Größe der Rasterpunkte durch die Fläche der vorhandenen Metallisierung 5 bzw. 5' vorgegeben. Dies bedeutet also, daß in den Bereichen C und D, die grundsätzlich den Bereichen A bzw. B entsprechen, die Metallisierung 5, 5' jeweils nur bereichsweise vorgesehen ist. Die Metallisierung ist in Form entsprechender Rasterpunkte vorgesehen, wobei in den Bereichen C die Metallisierung glatt, in den Bereichen D dagegen entsprechend dem Bereich B strukturiert ist.

Es kann der Fig. 3 weiter entnommen werden, daß im Bereich C die Abmessungen bzw. der Durchmesser der von der Metallisierung 5 erzeugten Rasterpunkte kleiner ist als der Durchmesser der metallisierten Strukturbereiche 5' in den Thermotransferfolien-Bereichen D.

Zur Ausbildung von Rasterpunkten c, d aus den Bereichen C, D wird ein Dot verwendet, dessen Durchmesser größer (oder auch kleiner) ist, als der Durchmesser der metallisierten, die Rasterpunkte des Typs c bzw. b darstellenden Abschnitte der Metallisierung 5 bzw. 5'. Üblicherweise wird man dabei Dots verwenden, die entsprechend den Rasterpunkten der Typen a und b eine vollflächige Bedeckung des Substrats mittels Rasterpunkten ermöglichen. Nach dem Übertragen der Transferschicht 3 aus den Bereichen C bzw. D auf das Substrat entstehen trotzdem Rasterpunkte c und d, deren Abmessungen deutlich geringer sein können als die Abmessungen der Rasterpunkte a und b, wobei zusätzlich die Rasterpunkte des Typs c glänzend erscheinen, während die Rasterpunkte des Typs d infolge der entsprechenden Struktur, bspw. einer Gitterstruktur, spezielle optische Effekte zu erzeugen in der Lage sind. Außerdem erscheinen die Rasterpunkte des Typs d scheinbar größer als die des Typs c, und zwar deswegen, weil die Metallisierungs-Abschnitte 5' größer sind als die Metallisierungs-Abschnitte 5.

Die Rasterpunkte der Typen a, b, c und d unterscheiden sich somit, wie vorstehend erläutert, einerseits durch die Struktur. Die Rasterpunkte des Typs a und c haben eine glatte Oberfläche, während die Rasterpunkte des Typs b und d mit einer optisch wirksamen Struktur versehen sind, wobei diese Struktur vorzugsweise eine eine Beugung oder Interferenz erzeugende Diffraktionsstruktur, zweckmäßig eine Gitterstruktur, ist.

Zum anderen unterscheiden sich die Rasterpunkte der verschiedenen Typen auch, zumindest scheinbar, hinsichtlich ihrer Größe. Die Rasterpunkte des Typs a und b sind im gezeigten Ausführungsbeispiel groß, so daß, wenn Rasterpunkte mittels des Thermotransfer-Druckers Punkt an Punkt übertragen werden, die ganze Oberfläche des Substrats abgedeckt wird. Demgegenüber sind die Rasterpunkte der Typen c und d scheinbar kleiner, so daß selbst bei Übertragung eines Rasterpunktes auf jede hierfür vorgesehene Stelle des Substrats trotzdem keine ganzflächige Abdeckung des Substrats mit Rasterpunkten c und d erfolgt. Allerdings wird dieser Effekt im vorliegenden Fall nur dadurch erreicht, daß die optisch in Erscheinung tretende Fläche der Rasterpunkte, bspw. die Metallisierung 5,5', verschiedene Abmessungen aufweist. Tatsächlich wird aber auch bei Erzeugung der Rasterpunkte des Typs c und d jeweils ein Ausschnitt der Transferschicht 3 übertragen, der einer vollen Rasterpunkt-Fläche entspricht, so daß auch in den Bereichen der Rasterpunkte des Typs c und d das Material der Transferschicht 3 dann, wenn sämtliche Rasterpunkte-Positionen beim Übertragungsvorgang gefüllt werden, ganzflächig vorgesehen ist. Selbstverständlich wäre es jedoch im Rahmen der Erfindung auch möglich, auf andere Weise Rasterpunkte unterschiedlichen Durchmessers zu erzeugen als durch entsprechend teilflächige Metallisierung 5, 5'. Bspw. könnten farbige Punkte unterschiedlicher Durchmesser in der Transferschicht 3 ausgebildet werden, die darüber hinaus nicht in eine Schutzlackschicht o. dgl. eingebettet sein müßten. Im einfachsten Fall wäre es durchaus denkbar, lediglich auf den Transferfilm 1 und ggfs. die Ablöseschicht 6 Rasterpunkte der gewünschten Abmessungen aufzudrucken und dann nur eine entsprechende Klebeschicht vorzusehen, wobei auch die Klebeschicht nicht über den Bereich der Rasterpunkte hinausgehen müßte. Bei Rasterpunkten unterschiedlicher Farbe wäre auch eine unterschiedliche Struktur erreichbar, indem bspw. Mattlacke und glänzend erscheinende Lacke verarbeitet werden.

Es sei weiterhin darauf hingewiesen, daß zur Erzeugung unterschiedlicher Farbeffekte insbesondere die Möglichkeit besteht, die transparente Schutzlackschicht 7 bzw. den strukturierbaren Lack 9 entsprechend einzufärben. Die Vorgehensweise gemäß der Erfindung kann außerdem auch grundsätzlich Verwendung finden, wenn nur in einem oder einigen Bereichen eine Metallisierung vorgesehen ist, andere Bereiche der Thermotransferfolie dagegen keine Metallisierung aufweisen.

Rasterbilder gemäß der Erfindung lassen sich somit in den unterschiedlichsten Ausführungsformen verwirklichen, wobei durch entsprechende Variation der Rasterpunkt-Durchmesser, der Oberflächen-Struktur sowie -Farbe den Gestaltungswünschen eine Vielzahl von Möglichkeiten eröffnet wird.

Die Materialien und Schichtstärken der einzelnen Schichten einer Thermotransferfolie gemäß der Erfindung werden nachstehend erläutert. Die Thermotransferfolie kann grundsätzlich wie folgt aufgebaut sein:
- Gleitschicht (2): : Schichtstärke 0,1 bis 1,0 µm
- Trägerfilm (1): : Polyethylenterephthalat mit einer Schichtstärke von 3,5 bis 12 µm
- Ablöseschicht (6) Tropf-: : Wachsschicht (Esterwachs mit punkt 90°C) Schichtstärke 0,005 bis 0,05 µm
- Schutzlackschicht (7): : Schichtstärke 0,4 bis 2,0 µm
- Strukturierbare Lackschicht (9): : Schichtstärke 0,2 bis 1,2 µm
- Metall (5,5') vollflä-: : Aluminium mit einer
- Schichtstärke chig oder partiell: : von 0,005 µm bis 0,05 µm
- Haftvermittler (8): : Schichtstärke 0,2 bis 1,2 µm
- Heißsiegelfähige Klebeschicht (4): : Schichtstärke 0,5 bis 5 µm

Die verschiedenen Schichten können wie folgt zusammengesetzt sein:

| Gleitschicht (2) (rückseitig) | Gewichts-Teile |
|---|---|
| Methylethylketon | 810 |
| Cyclohexanon | 125 |
| Celluloseacetopropionat (Fp: 210°C) | 50 |
| Polyvinylidenfluorid (d=1,7 g/cm³) | 15 |

| Schutzlackschicht (7) | Gewichts-Teile |
|---|---|
| Methylethylketon | 455 |
| Ethylacetat | 240 |
| Cyclohexanon | 60 |
| Methylmethacrylat (Tg. ca. 105°C) | 245 |

Es können zur Erzeugung von farbigen Rasterbildern ggf. verschiedene lösbare Farbstoffe bzw. Pigmente zugegeben werden.

| Strukturierbare Lackschicht (9) | Gewichts-Teile |
|---|---|
| Methylethylketon | 400 |
| Ethylacetat | 260 |
| Butylacetat | 160 |
| Polymethylmethacrylat (Erweichungspkt. ca. 170°C) | 150 |
| Styrolcopolymerisat (Erweichungspkt. ca. 100°C) | 30 |

| Haftvermittler (8) | Gewichts-Teile |
|---|---|
| Methylethylketon | 450 |
| Toluol | 455 |
| Hydroxylgruppenhaltiges Vinylchlorid-Vinylacetat-Terpolymer (Tg = 80°C) | 95 |

| Heißsiegelfähige Klebeschicht (4) | Gewichts-Teile |
|---|---|
| Methylethylketon | 380 |
| Toluol | 400 |
| Ethylen-Vinylacetat-Terpolymer (Fp. 66°C) | 60 |
| Ketonharz (Fp. 85-90°C) | 80 |
| Vinylchlorid-/Vinylacetat-Copolymer (Fp. 80°C) | 70 |
| Siliciumdioxid | 10 |

Die Teilmetallisierung der Transferschicht 3 in den Bereichen C und D wird in grundsätzlich bekannter Weise erzeugt. Bspw. kann die in einem üblichen Aufdampfverfahren aufgebrachte Metallschicht 5, 5' in einem punktförmigen Rasterdruck mittels eines Ätzresistlackes überdruckt werden, wobei der Ätzresistlack wie folgt zusammengesetzt sein kann:

| Ätzresistlack | Gewichts-Teile |
|---|---|
| Methylethylketon | 550 |
| Ethylacetat | 175 |
| Cyclohexanon | 50 |
| Polyurethanharz (Fp ≥ 200°C) | 100 |
| Polyvinylchlorid Terpolymer (Tg = 90°C) | 120 |
| Siliciumdioxid | 5 |

Der Ätzresistlack wird vorteilhafterweise mit einer elektronisch gravierten Rasterwalze aufgetragen, die üblicherweise mindestens zwei Rasterfelder mit unterschiedlicher Rasterpunktgröße bzw. Rasterpunktdichte druckt. Dabei können folgende Abmessungen verwendet werden:

| | |
|---|---|
| Rasterpunktdichte | 54/cm |
| Gravurtiefe | 50 µm |
| Näpfchendiagonale | 110 µm ± 5 µm |
| Stegbreite | 75 µm ± 5 µm |
| bzw. | |
| Näpfchendiagonale | 125 µm ± 5 µm |
| Stegbreite | 60 µm ± 5 µm |
| bzw. | |
| Näpfchendiagonale | 170 µm ± 5 µm |
| Stegbreite | 15 µm ± 5 µm |

Die nicht abgedeckten Bereiche der Metallisierung 5,5' können nach dem Aufbringen des Ätzresistlackes und dessen entsprechende Härtung bspw. mit einer wässrigen, alkalischen Lösung (pH ≥ 10) bei Raumtemperatur abgeätzt werden.

Die Teilmetallisierung kann aber auch gemäß anderen, aus der Literatur bekannten Verfahren, z.B. unter Verwendung von wasser-/alkohollöslichen Sperrfonds, in sonstiger Ätztechnik oder auch mittels Laserabtragung, bspw. mit einem Nd-YAG-Laser erfolgen.

Die Aufbringung der verschiedenen Lagen der Transferschicht 3 auf dem Trägerfilm 1 erfolgt in der an sich von Heißprägefolien her bekannten Weise, weshalb hier keine weitere diesbezügliche Erläuterung erforderlich scheint.

Zur Erzeugung des Rasterbildes gemäß Fig. 1 kann in unterschiedlicher Weise vorgegangen werden.

Eine Möglichkeit besteht darin, eine vollflächig metallisierte Thermotransferfolie (sh. Bereiche A, B des Ausführungsbeispiels), die vorzugsweise mehrere unterschiedliche ausgebildete, optisch wirksame Strukturen aufweist, rasterförmig auf das Substrat, z.B. eine Kunststoffkarte zu transferieren. Die Steuerung des Thermotransfers erfolgt dabei zweckmäßig über einen Steuerrechner und ein geeignet modular aufgebautes Softwaresystem. Es kann bspw. ein Thermodrucker verwendet werden, der eine Auflösung von 16 Punkten/mm besitzt. Die Raster können unterschiedlichste Formen, z.B. Kreisform, Rechteckform, mit abgerundeten Ecken etc. aufweisen.

Die andere Möglichkeit (entsprechend dem Arbeiten mit den Bereichen C und D der Thermotransferfolie des Ausführungsbeispiels) besteht darin, daß eine partiell metallisierte Thermotransferfolie verwendet wird, die entsprechend den Bereichen C und D bspw. mehrere unterschiedliche, optisch wirksame Strukturen aufweist, wobei zusätzlich durch die Teilmetallisierung Rasterfelder unterschiedlicher Punktgrößen erzeugt sind. Auch in diesem Fall wird das Rasterbild durch vollflächige Übertragung von Bildbereichen erzeugt, die jedoch unterschiedliche Rasterpunktgröße bzw. Rasterpunktdichte aufweisen.

Bei den optisch wirksamen Oberflächen-Strukturen wie sie z.B. in den Bereichen B und D des Ausführungsbeispiels vorgesehen sind, können Variationen durch Unterschiede in der Gitterlinienzahl (500 - 2000 Linien/mm), der Gitterlinientiefe (0,2 - 2,0 µm) und der Gitterform (Linien-, Rechtecks- oder sinuidale Gitterstruktur) erzeugt werden, wobei die entsprechenden Strukturen in Anpassung an den gewünschten Effekt frei wählbar bzw. kombinierbar sind.

Die verschiedenen Bildbereiche des Rasterbildes bzw. die Rasterpunkttypen unterscheiden sich somit durch unterschiedliche Größe, unterschiedlich optisch wirksame Struktur und ggfs. unterschiedliche Farbe, was bedeutet, daß sich ein Rasterbild gemäß der Erfindung äußerst vielseitig gestalten und zusammensetzen läßt. Infolge der speziellen Strukturen kann außerdem erreicht werden, daß das Rasterbild hohe Sicherheit gegen Fälschungen, insbesondere im Wege des Farbkopierens bietet. Die unterschiedliche Färbung der Rasterpunkte wird durch unterschiedliche Einfärbung der Schutzlackschicht erreicht.

## Patentansprüche

1. Rasterbild, welches aus wenigstens zwei Arten von unterschiedliche Eigenschaften aufweisenden Rasterpunkten besteht und in einem Thermotransferverfahren erzeugt ist,
**dadurch gekennzeichnet**, daß wenigstens zwei Arten (a,b;c,d) von Rasterpunkten (a,b, c,d) jeweils eine unterschiedliche, durch Beugung, Interferenz oder Reflexion des Lichtes optisch wirksame Struktur aufweisen.

2. Rasterbild nach Anspruch 1,
**dadurch gekennzeichnet**, daß die optisch wirksame Struktur zumindest einer Art (b,d) von Rasterpunkten (a,b,c,d) eine eine Beugung oder Interferenz erzeugende Diffraktionsstruktur, vorzugsweise Gitterstruktur ist.

3. Rasterbild nach Anspruch 1 oder 2,
**dadurch gekennzeichnet**, daß zumindest eine Art von Rasterpunkten (a,b,c,d) eine reflektierende Schicht (5, 5') aufweist.

4. Rasterbild nach einem der vorhergehenden Ansprüche,
**dadurch gekennzeichnet**, daß wenigstens zwei Arten (a,b;c;d) von Rasterpunkten (a,b,c,d) jeweils unterschiedliche Abmessungen aufweisen.

5. Rasterbild nach einem der vorhergehenden Ansprüche,
**dadurch gekennzeichnet**, daß wenigstens zwei Arten von Rasterpunkten (a,b,c,d) jeweils unterschiedliche Farbe aufweisen.

6. Thermotransferfolie zur Herstellung eines aus wenigstens zwei Arten von unterschiedliche Eigenschaften aufweisenden Rasterpunkten bestehenden Rasterbildes nach einem der Ansprüche 1 bis 5, deren von einem Trägerfilm auf das Substrat übertragbare Transferschicht zur Erzeugung der unterschiedlichen Rasterpunkte eine der Zahl der unterschiedlichen Rasterpunkte entsprechende Anzahl jeweils einer Rasterpunkt-Art zugeordneter, entsprechend verschieden ausgebildeter Bereiche aufweist,
**dadurch gekennzeichnet**, daß die unterschiedlichen Bereiche (A,C;B,D) der Transferschicht (3) jeweils eine optisch durch Beugung, Interferenz oder Reflexion des Lichtes unterschiedlich wirksame Struktur aufweisen.

7. Thermotransferfolie nach Anspruch 6,
**dadurch gekennzeichnet**, daß die Transferschicht (3) in den unterschiedlichen Bereichen (A,B;C;D) Rasterpunkte (a,b;c;d) unterschiedlicher Abmessungen aufweist.

8. Thermotransferfolie nach Anspruch 6 oder 7,
**dadurch gekennzeichnet**, daß die Transferschicht (3) wenigstens in einem Bereich (A,B,C,D) eine reflektierende Schicht (5,5') aufweist.

9. Thermotransferfolie nach Anspruch 8,
**dadurch gekennzeichnet**, daß die reflektierende Schicht (5,5') von einer Metallisierung gebildet ist.

10. Thermotransferfolie nach einem der Ansprüche 6 bis 9,
**dadurch gekennzeichnet**, daß die optisch wirksame Struktur eine eine Beugung oder Interferenz erzeugende Diffraktionsstruktur, insbesondere Gitterstruktur ist.

11. Thermotransferfolie nach einem der Ansprüche 6 bis 10,
**dadurch gekennzeichnet**, daß die Transferschicht (3) in wenigstens einem Bereich (A,B,C,D) anschließend an den Trägerfilm (1) eine transparente Schutzlackschicht (7) aufweist.

12. Thermotransferfolie nach Anspruch 11,
**dadurch gekennzeichnet**, daß die transparenten Schutzlackschichten (7) wenigstens zweier Bereiche (A,B,C,D) der Transferschicht (3) unterschiedliche Farbe aufweisen.

13. Thermotransferfolie nach einem der Ansprüche 6 bis 12,
**dadurch gekennzeichnet**, daß die optisch wirksame Struktur in eine Lackschicht (9) der Transferschicht (3) eingeprägt ist.

14. Thermotransferfolie nach einem der Ansprüche 11 bis 13,
**dadurch gekennzeichnet**, daß die Schutzlackschicht (7) die optisch wirksame Struktur bei auf ein Substrat aufgebrachter Transferschicht (3) abdeckt.

## Claims

1. Dot-matrix image which is composed of at least two types of halftone dots having different properties and is produced using a thermal transfer method, characterized in that at least two types (a,b;c,d) of halftone dots (a,b, c,d) each have a different structure acting optically by diffraction, interference or reflection of the light.

2. Dot-matrix image according to Claim 1, characterized in that the optically acting structure of at least one type (b,d) of halftone dots (a,b,c,d) is a diffraction structure which produces diffraction or interference, preferably a grid structure.

3. Dot-matrix image according to Claim 1 or 2, characterized in that at least one type of halftone dots (a,b,c,d) has a reflective layer (5, 5').

4. Dot-matrix image according to one of the preceding claims, characterized in that at least two types (a,b;c;d) of halftone dots (a,b,c,d) each have different dimensions.

5. Dot-matrix image according to one of the preceding claims, characterized in that at least two types of halftone dots (a,b,c,d) each have different colours.

6. Thermal transfer foil for producing a dot-matrix image composed of at least two types of halftone dots having different properties according to one of Claims 1 to 5, the transfer layer of which foil, which can be transferred from a carrier film onto the substrate for producing the different halftone dots, has a number of regions respectively assigned to a type of halftone dot and of a correspondingly different form, the number corresponding to the number of different halftone dots, characterized in that the different regions (A,C;B,D) of the transfer layer (3) in each case have a structure acting with an optically different effect by diffraction, interference or reflection of the light.

7. Thermal transfer foil according to Claim 6, characterized in that the transfer layer (3) has in the different regions (A,B;C;D) halftone dots (a,b;c;d) of different dimensions.

8. Thermal transfer foil according to Claim 6 or 7, characterized in that the transfer layer (3) has, at least in one region (A,B,C,D), a reflective layer (5,5').

9. Thermal transfer foil according to Claim 8, characterized in that the reflective layer (5,5') is formed by a metallization.

10. Thermal transfer foil according to one of Claims 6 to 9, characterized in that the optically effective structure is a diffraction structure, in particular a grid structure, producing diffraction or interference.

11. Thermal transfer foil according to one of Claims 6 to 10, characterized in that the transfer layer (3) has, in at least one region (A,B,C,D), adjoining the carrier film (1) a transparent protective coating layer (7).

12. Thermal transfer foil according to Claim 11, characterized in that the transparent protective coating layers (7) of at least two regions (A,B,C,D) of the transfer layer (3) have different colours.

13. Thermal transfer foil according to one of Claims 6 to 12, characterized in that the optically effective structure is stamped into a coating layer (9) of the transfer layer (3).

14. Thermal transfer foil according to one of Claims 11 to 13, characterized in that the protective coating layer (7) covers the optically effective structure when a transfer layer (3) has been applied to a substrate.

## Revendications

1. Image constituée d'une matrice de points, qui est constituée d'au moins deux types de points de matrice présentant des caractéristiques différentes et qui est produite dans le cadre d'un procédé de transfert thermique, caractérisée en ce qu'au moins deux types (a, b; c, d) de points de matrice (a, b, c, d) présentent une structure efficace différente sur le plan optique par diffraction, interférence ou réflexion.

2. Image constituée d'une matrice de points selon la revendication 1, caractérisée en ce que la structure efficace sur le plan optique d'au moins un type (b, d) de points de matrice (a, b, c, d) est une structure diffractante produisant une diffraction ou une interférence, de préférence une structure en réseau.

3. Image constituée d'une matrice de points selon la revendication 1 ou 2, caractérisée en ce qu'au moins un type de point de matrice (a, b, c, d) présente une couche réfléchissante (5, 5').

4. Image constituée d'une matrice de points selon l'une des revendications précédentes, caractérisée en ce qu'au moins deux types (a, b; c; d) de points de matrice (a, b, c, d) présentent chacun des dimensions différentes.

5. Image constituée d'une matrice de points selon l'une des revendications précédentes, caractérisée en ce qu'au moins deux types de points de matrice (a, b, c, d) présentent chacun des couleurs différentes.

6. Film de transfert thermique pour la fabrication d'une image constituée d'une matrice de points, constituée d'au moins de deux types de points de matrice présentant des caractéristiques différentes selon l'une des revendications 1 à 5, dont la couche de transfert, transférable d'un film porteur sur le substrat pour produire les différents points de matrice, présente un nombre, correspondant au nombre des différents points de matrice , de zones, affectées dans chaque cas à un type de point de matrice, formées différemment de manière correspondante, caractérisé en ce que les différentes zones (A, C; B, D) de la couche de transfert (3) présentent chacune une structure ayant une efficacité différente sur le plan optique par diffraction, interférence ou réflexion.

7. Film de transfert thermique selon la revendication 6, caractérisé en ce que la couche de transfert (3) dans les différentes zones (A, B; C; D) présentent des points de matrice (a, b; c; d) de dimensions différentes.

8. Film de transfert thermique selon la revendication 6 ou 7, caractérisé en ce que la couche de transfert (3) présente, au moins dans une zone (A, B, C, D), une couche réfléchissante (5, 5').

9. Film de transfert thermique selon la revendication 8, caractérisé en ce que la couche réfléchissante (5,5') est formée d'une métallisation.

10. Film de transfert thermique selon l'une des revendications 6 à 9, caractérisé en ce que la structure efficace sur le plan optique est une structure diffractante produisant une diffraction ou une interférence, en particulier une structure en réseau.

11. Film de transfert thermique selon l'une des revendications 6 à 10, caractérisé en ce que la couche de transfert (3), dans au moins une zone (A, B, C, D) contiguë au film porteur (1), présente une couche de vernis de protection transparente (7).

12. Film de transfert thermique selon la revendication 11, caractérisé en ce que les couches de vernis de protection transparente (7) d'au moins deux zones (A, B, C, D) de la couche de transfert (3) présentent des couleurs différentes.

13. Film de transfert selon l'une des revendications 6 à 12, caractérisé en ce que la structure efficace sur le plan optique est incrustée dans une couche de vernis (9) de la couche de transfert (3).

14. Film de transfert thermique selon l'une des revendications 11 à 13, caractérisé en ce que la couche de vernis de protection (7) recouvre la structure efficace sur le plan optique dans le cas de la couche de transfert (3) déposée sur un substrat.
